# EUROPÄISCHE PATENTSCHRIFT

(11) **EP 3 163 358 B1**
(45) Veröffentlichungstag und Bekanntmachung des Hinweises auf die Patenterteilung: **28.03.2018**
(21) Anmeldenummer: 15192098.0
(22) Anmeldetag: 29.10.2015
(51) Int. Cl.: G02B 27/02, G02B 27/22, H04N 13/04, G02B 27/00, G06T 19/00, H04N 13/02, G06F 3/01

(54) **VISUALISIERUNGSVORRICHTUNG**
VISUALISATION DEVICE
DISPOSITIF DE VISUALISATION

(43) Veröffentlichungstag der Anmeldung: 03.05.2017
(73) Patentinhaber: X-Rite Switzerland GmbH, 8105 Regensdorf (CH)
(72) Erfinder: Lamy, Francis, 8832 Wollerau (CH); Rump, Martin, 53809 Winterscheid (DE)
(74) Vertreter: Schwabe - Sandmair - Marx

(56) Entgegenhaltungen:
- CARSTEN RÖCKER ET AL: "Creating Spatio-Temporal Contiguities Between Real and Virtual Rooms in an Assistive Living Environment", ELECTRONIC WORKSHOPS IN COMPUTING (ONLINE), 1. Januar 2010 (2010-01-01), XP055265816,
- MARC ELLENS ET AL: "From color to appearance in the real world", MATERIAL APPEARANCE MODELING, EUROGRAPHICS ASSOCIATION, P. O. BOX 16 AIRE-LA-VILLE CH-1288 SWITZERLAND, 19. Juni 2013 (2013-06-19), Seiten 7-10, XP058058252, DOI: 10.2312/MAM.MAM2013.007-010 ISBN: 978-3-905674-48-4
- KEVIN SMET ET AL: "Colour appearance rating of familiar real objects", COLOR RESEARCH & APPLICATION, Bd. 36, Nr. 3, 11. April 2011 (2011-04-11) , Seiten 192-200, XP055265758, US ISSN: 0361-2317, DOI: 10.1002/col.20620
- SIMONETTA FUMAGALLI ET AL: "Experimental assessment of color-rendering indices and color appearance under varying setups", JOURNAL OF MODERN OPTICS, Bd. 62, Nr. 1, 11. September 2014 (2014-09-11), Seiten 56-66, XP055265786, LONDON, GB ISSN: 0950-0340, DOI: 10.1080/09500340.2014.952694

## Beschreibung

Die Erfindung betrifft eine Visualisierungsvorrichtung gemäss dem Oberbegriff des unabhängigen Anspruchs 1.

Die Erfindung fällt im weitesten Sinn in das Gebiet der Visualisierung von Objekten oder Materialien auf einem Bildschirm mit Hilfe von computer-grafischen Techniken. Dabei wird eine digitale Repräsentation eines realen Materials oder einer Oberfläche eines realen Objekts auf ein virtuelles Objekt beliebiger Gestalt angewandt (gerendert) und die so simulierte Appearance des virtuellen Objekts wird dann unter benutzergewählten Beleuchtungsbedingungen und Betrachtungsrichtungen auf dem Bildschirm dargestellt.

Unter Appearance eines Materials wird der durch die Gesamtheit aller farblichen und strukturellen sowie stofflichen Eigenschaften gegebene visuelle Eindruck eines körperlichen Materials, beispielsweise der Oberfläche eines Objekts, unter verschiedenen Beleuchtungs- und Beobachtungsbedingungen verstanden. Zu den stofflichen Eigenschaften gehört zum Beispiel die Transluzenz. Appearance-Daten sind eine digitale Repräsentation der Appearance eines Materials. Unter Rendering bzw. Rendern wird die computer-grafische Anwendung von die Appearance eines Materials beschreibenden Daten, also Appearance-Daten, auf die Oberfläche eines virtuellen Materials oder Objekts sowie die Darstellung des virtuellen Materials oder Objekts verstanden. Die Begriffe Appearance, Appearance-Daten und Rendering bzw. Rendern haben sich in der einschlägigen Fachwelt durchgesetzt und werden deshalb auch im vorliegenden Text verwendet.

In kreativen Anwendungen, wie z.B. Produkt Design, werden umfassende Datenbanken von Appearance-Daten benötigt. Bekannte Beispiele von Appearance-Daten bzw. Datensätzen sind die sog. Bidirectional Texture Function (BTF) und die Spatially Varying Bidirectional Reflectance Distribution Function (SVBRDF). Um von einem realen Material bzw. der Oberfläche eines realen Objekts einen Satz von Appearance-Daten wie z.B. eine BTF oder SVBRDF zu erhalten, wird ein representativer Oberflächenbereich des betreffenden Objekts für eine grosse Anzahl von Beleuchtungsrichtungen und Betrachtungsrichtungen pixelweise farbmetrisch ausgemessen, typischerweise unter Einsatz einer Anzahl von digitalen Farbkameras und eines komplexen Beleuchtungssystems mit hunderten von Punktlichtquellen, die über die Hemisphäre oberhalb und/oder unterhalb des auszumessenden Materials verteilt angeordnet sind.

Mit von einem realen Material vorliegenden Appearance-Daten erfolgt die Visualisierung, das heisst die auf ein virtuelles Objekt beliebiger Gestalt gerenderte grafische Darstellung des Materials auf dem Bildschirm unter jeder gewünschten Beleuchtungsbedingung und jeder gewünschten Betrachtungsrichtung, mittels digitaler Rendering-Techniken, welche die Appearance-Daten als Eingangsdaten benutzen. Geeignete Rendering-Techniken und entsprechende Software sind in der Computer-Grafik wohlbekannt und nicht Gegenstand der vorliegenden Erfindung. Es sei lediglich erwähnt, dass solche Rendering-Techniken aus den Appearance-Daten für jeden Bildpunkt des realen Materials für jede gegebene Beleuchtungsrichtung und jede gegebene Beobachtungsrichtung Farbwerte (color reflectance values) entnehmen können, wobei Zwischenwerte durch Interpolation der in den Appearance-Daten enthaltenen Werte berechnet werden können.

In allen praktischen Anwendungen der genannten Visualisierungstechniken wird eine möglichst gute Übereinstimmung zwischen der Appearance des zugrundeliegenden realen Materials bzw. Objekts und dem virtuellen Objekt, auf welches die Appearance des realen Materials gerendert wurde, angestrebt, und zwar unter allen Beleuchtungs- und Betrachtungsbedingungen. Wenn man davon ausgeht, dass die eingesetzten Rendering-Techniken selbst ausreichend leistungsfähig sind, dann hängt die Qualität der Virtualisierung in erster Linie von der Güte der zugrundeliegenden Appearance-Daten ab. Ausserdem sind manche realen Materialien weniger gut für eine simulierte Visualisierung geeignet als andere. Letzten Endes kann die Qualität der Virtualisierung nur durch einen visuellen Vergleich des zugrundeliegenden realen Materials bzw. Objekts mit dem virtuellen Objekt beurteilt werden, wobei aber dieser visuelle Vergleich möglichst unter kontrollierten Beleuchtungs- und Betrachtungsbedingungen erfolgen sollte.

Vor diesem Hintergrund besteht die Aufgabe der Erfindung in der Bereitstellung einer Visualisierungsvorrichtung, welche die direkte visuelle Beurteilung und den Vergleich eines realen Objekts mit einem virtuellen Objekt ermöglicht, welches durch rechner-basiertes Rendering digitaler Appearance-Daten des realen Objekts auf einem Bildschirm dargestellt ist. Insbesondere soll die Visualisierungsvorrichtung ermöglichen, die Beurteilung bzw. den Vergleich unter kontrollierten Beleuchtungs- und Betrachtungsbedingungen durchzuführen.

Die Veröffentlichung "Creating Spatio-Temporal Contiguities Between Real and Virtual Rooms in an Assistive Living Environment" by Carsten Röcker et al, Electronic Workshops in Computing (Online), 1. Januar 2010, XP055265816 fokussiert sich auf die Möglichkeiten die entstehen, wenn Wände zu Bildschirmen werden und auf die Rolle dieser Bildschirme im Kontext von betreutem Wohnen und "mixed reality". In dieser Veröffentlichung wird unter anderem darauf eingegangen, wie der Übergang zwischen einem realen Wohnraum und einem auf dem Bildschirm dargestellten Raum benutzerfreundlich angezeigt werden kann.

Die Veröffentlichung "From color to appearance in the real world" von Marc Ellens et al, Material Appearance Modeling, Eurographics Association, P.O. Box 16 Aire-La-Ville CH-1288 Switzerland, 19. Juni 2013, XP058058252 befasst sich mit der Generierung möglichst realitätsgetreuer digitaler Modelle, insbesondere mit deren Farbgebung und Beleuchtungsverhalten.

Diese der Erfindung zugrundeliegende Aufgabe wird durch die durch die Merkmale des unabhängigen Anspruchs 1 gekennzeichnete erfindungsgemässe Visualisierungsvorrichtung gelöst. Vorteilhafte Ausgestaltungen und Weiterbildungen der erfindungsgemässen Visualisierungsvorrichtung sind Gegenstand der abhängigen Ansprüche.

Das Wesen der Erfindung besteht in Folgendem: Eine Visualisierungsvorrichtung umfasst einen realen Lichtkasten, der eine Beleuchtungsanordnung sowie eine bezogen auf einen Betrachter hintere Begrenzungswand aufweist. Die hintere Begrenzungswand des realen Lichtkastens ist als Bildschirm ausgebildet und die Vorrichtung weist einen Rechner auf, der dazu ausgebildet ist, auf dem Bildschirm einen virtuellen Lichtkasten so darzustellen, dass der auf dem Bildschirm dargestellte virtuelle Lichtkasten eine kontinuierliche Verlängerung des realen Lichtkastens nach hinten zu bilden scheint, so dass für den Betrachter der Eindruck entsteht, es handle sich um einen einzigen zusammenhängenden Lichtkasten. Der Rechner ist ferner dazu ausgebildet, mindestens ein virtuelles Objekt so auf dem Bildschirm darzustellen, dass das virtuelle Objekt sich im virtuellen Lichtkasten zu befinden scheint.

Durch die erfindungsgemässe Kombination eines realen Lichtkastens mit einem virtuellen Lichtkasten, der eine virtuelle Verlängerung des realen Lichtkastens bildet, kann der Betrachter auf ein virtuelles Objekt gerenderte digitale Appearance-Daten in direktem Vergleich mit einem realen Objekt unter äusserst realistischen Bedingungen beurteilen. Die erfindungsgemässe integrierte Lösung erlaubt eine uneingeschränkte Materialbeurteilung bei vollkommener Kontrolle des Einflusses von Form und Licht durch eine wohldefinierte und standardisierte Betrachtungsumgebung.

Gemäss einem vorteilhaften Ausführungsbeispiel weist der reale Lichtkasten eine reale untere Begrenzungswand und reale seitliche Begrenzungswände auf und sind zwischen der realen unteren Begrenzungswand und je einer der beiden realen seitlichen Begrenzungswände reale stetig oder facettiert abgerundete Übergangsbereiche ausgebildet. Ferner weist der virtuelle Lichtkasten eine virtuelle untere Begrenzungswand und virtuelle seitliche Begrenzungswände auf und befinden sich zwischen der virtuellen unteren Begrenzungswand und je einer der beiden virtuellen seitlichen Begrenzungswände virtuelle stetig oder facettiert abgerundete Übergangsbereiche. Und ferner gehen die realen Übergangsbereiche und die virtuellen Übergangsbereiche für einen Betrachter nahtlos in einander über. Vorteilhafterweise erweitern sich dabei die realen Übergangsbereiche und entsprechend auch die virtuellen Übergangsbereiche nach hinten.

Vorteilhafterweise weist dabei der virtuelle Lichtkasten eine virtuelle hintere Begrenzungswand und einen virtuellen Übergangsbereich zwischen der virtuellen unteren Begrenzungswand und der virtuellen hinteren Begrenzungswand auf und ist dieser virtuelle Übergangsbereich stetig oder facettiert abgerundet ausgebildet.

Zweckmässigerweise weist der virtuelle Lichtkasten virtuelle Übergangsbereiche zwischen der virtuellen hinteren Begrenzungswand und den virtuellen seitlichen Begrenzungswänden auf und sind diese virtuellen Übergangsbereiche stetig oder facettiert abgerundet ausgebildet.

Vorteilhafterweise sind die virtuellen Übergangsbereiche zwischen der virtuellen hinteren Begrenzungswand und den virtuellen seitlichen Begrenzungswänden und der virtuellen unteren Begrenzungswand als Klothoiden ausgeprägt.

Durch die (stetig oder facettiert) abgerundeten Übergangsbereiche fallen Parallaxe-Fehler der Darstellung des virtuellen Lichtkastens nicht oder weniger auf.

Vorteilhafterweise weist die Visualisierungsvorrichtung eine erste Sensoranordnung zur Erfassung der Position der Augen eines Betrachters auf. Die erste Sensoranordnung und der Rechner sind vorteilhafterweise dazu ausgebildet, die Höhe der Augen des Beobachters über einer Standfläche zu bestimmen und die Vorrichtung weist vom Rechner gesteuerte Mittel zur Verstellung der Höhe des realen Lichtkastens über der Standfläche auf. Der Rechner ist dabei dazu ausgebildet, die Höhe des realen Lichtkastens über der Standfläche aufgrund der bestimmten Augenhöhe des Betrachters über der Standfläche einzustellen. Dadurch ist gewährleistet, dass der Betrachter unabhängig von seiner körperlichen Grösse stets beste Sichtbedingungen hat.

Gemäss einer weiteren vorteilhaften Ausgestaltung sind die erste Sensoranordnung und der Rechner dazu ausgebildet, die Position der Augen eines Betrachters relativ zum realen Lichtkasten zu bestimmen und ist der Rechner dazu ausgebildet, aufgrund der bestimmten Position der Augen des Betrachters die perspektivische Darstellung des virtuellen Lichtkastens so anzupassen, dass der virtuelle Lichtkasten in jeder Position des Betrachters für diesen eine kontinuierliche Verlängerung des realen Lichtkastens darstellt.

Vorteilhafterweise ist der Rechner dazu ausgebildet, ihm zugeführte Appearance-Daten eines realen Materials oder Objekts auf ein virtuelles Objekt zu rendern.

Besonders vorteilhafterweise ist der Rechner dazu ausgebildet, aufgrund der bestimmten Augenposition des Betrachters die perspektivische Darstellung des virtuellen Objekts anzupassen. Dadurch sieht der Betrachter das reale Objekt und das virtuelle Objekt immer aus der gleichen Perspektive.

Gemäss einer weiteren vorteilhaften Ausgestaltung der erfindungsgemässen Visualisierungsvorrichtung sind im Rechner mehrere auf unterschiedlichen Blickwinkeln basierende Monitor-Profile gespeichert und ist der Rechner dazu ausgebildet, beim Rendern des virtuellen Lichtkastens und des virtuellen Objekts in Abhängigkeit der bestimmten Position der Augen des Betrachters relativ zum realen Lichtkasten aus den gespeicherten Monitor-Profilen ein Monitor-Profil auszuwählen oder zu berechnen und anzuwenden. Durch den Einsatz blickwinkelabhängiger Monitor-Profile wird die Qualität der Darstellung noch weiter erhöht.

Gemäss einer weiteren vorteilhaften Ausgestaltung weist die Visualisierungsvorrichtung eine zweite Sensoranordnung zur Erfassung der räumlichen Orientierung eines oder mehrerer im realen Lichtkasten platzierten/r realen/r Objekts/e auf, und ist der Rechner dazu ausgebildet, die räumliche Orientierung des/der korrespondierenden virtuellen Objekts/e an die erfasste räumliche Orientierung des/der realen Objekts/e anzupassen.

Vorteilhafterweise sind die Beleuchtungsbedingungen im realen Lichtkasten einstellbar veränderbar und ist der Rechner dazu ausgebildet, die Beleuchtungsbedingungen des realen Lichtkastens im virtuellen Lichtkasten nachzubilden sowie das Rendern des virtuellen Objekts entsprechend anzupassen. Dadurch sieht der Betrachter das reale Objekt und das virtuelle Objekt immer unter denselben Beleuchtungsbedingungen.

Gemäss einer weiteren vorteilhaften Ausführungsform ist der Bildschirm ein Bildschirm mit hoher Leuchtdichte im Bereich von 2500 - 5000 cd/m². Gemäss einer anderen vorteilhaften Ausführungsform ist der Bildschirm ein autostereoskopischer Bildschirm.

Gemäss einer weiteren vorteilhaften Ausgestaltung weist die Visualisierungsvorrichtung eine dritte Sensoranordnung zur Erfassung von Umgebungslicht auf und ist der Rechner dazu ausgebildet, das Rendern des virtuellen Objekts aufgrund des erfassten Umgebungslichts anzupassen. Dadurch ist ein vom Umgebungslicht unabhängiger objektive Vergleich von realem und virtuellem Objekt möglich.

Gemäss einer weiteren vorteilhaften Ausgestaltung weist die Visualisierungsvorrichtung eine vierte Sensoranordnung zur Erfassung des Beleuchtungslichts des realen Lichtkastens auf und ist der Rechner dazu ausgebildet, das Rendern des virtuellen Objekts aufgrund des erfassten Beleuchtungslichts anzupassen.

Zweckmässigerweise weist die Visualisierungsvorrichtung mit der vierten Sensoranordnung zusammenarbeitende Kompensationsmittel auf, um insbesondere alterungsbedingte Veränderungen der Beleuchtungsanordnung bzw. deren Lichtquellen zu kompensieren. Dadurch kann die Langzeitstabilität der Visualisierungsvorrichtung erreicht bzw. verbessert werden.

In einer Variante der erfindungsgemässen Visualisierungsvorrichtung ist die Beleuchtungsanordnung durch einen vom Rechner gesteuerten Bildschirm gebildet. Dadurch lässt sich das Beleuchtungslicht auf einfache Weise in weiten Grenzen an die jeweiligen Bedürfnisse anpassen.

In einer weiteren Variante sind die seitlichen Begrenzungswände des realen Lichtkastens und gegebenenfalls auch dessen untere Begrenzungswand als vom Rechner gesteuerte Bildschirme ausgebildet. Dies erlaubt zum einen die Beleuchtung des realen Objekts und zum anderen aber auch, das virtuelle Objekt in einer kompletten hemisphärischen Umgebung darzustellen. Vorzugsweise ist dabei zur Vermeidung des Eindrucks von scharfen Kanten zwischen je zwei aneinander grenzenden Bildschirmen ein Lichtleitermaterial angeordnet. Zusätzlich oder alternativ können die Bildschirme an ihren Seiten abgerundete Übergangsbereiche aufweisen.

Im Folgenden wird die Erfindung anhand der Zeichnung näher erläutert. Es zeigen:
- Fig. 1: eine grobe Übersichtsdarstellung des grundsätzlichen Aufbaus eines Ausführungsbeispiels der erfindungsgemässen Visualisierungsvorrichtung,
- Fig. 2: eine detailliertere Darstellung der Visualisierungsvorrichtung der Fig. 1,
- Fig. 3: ein Blockschema der rechnerbasierten Steuerung der Visualisierungsvorrichtung der Fig. 1,
- Fig. 4: eine Detailansicht der Visualisierungsvorrichtung der Fig. 1,
- Fig. 5: einen virtuellen Detailschnitt nach der Linie V-V der Fig. 4,
- Fig. 6: einen virtuellen Detailschnitt nach der Linie VI-VI der Fig. 4,
- Fig. 7: einen virtuellen Detailschnitt nach der Linie VII-VII der Fig. 4,
- Fig. 8: eine blockschematische Illustration einer Perspektive-Anpassung und
- Fig. 9: eine schematische Skizze einer zweiten Ausführungsform der erfindungsgemässen Visualisierungsvorrichtung.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen.

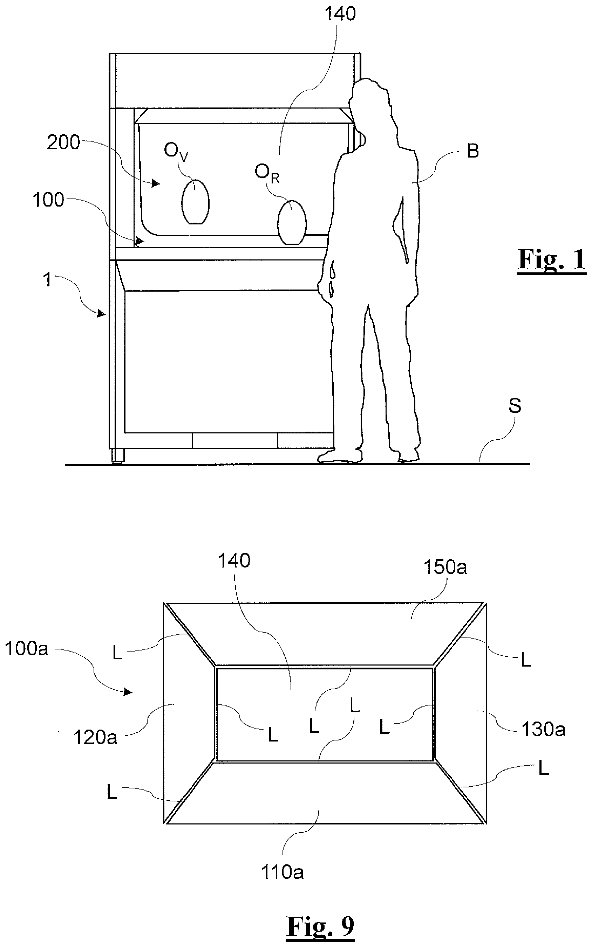

Gemäss der Darstellung der Fig. 1 umfasst die erfindungsgemässe Visualisierungsvorrichtung einen im praktischen Betrieb auf einer Standfläche S aufgestellten Montagerahmen 1, der alle Komponenten der Vorrichtung aufnimmt. Im oberen Teil des Montagerahmens 1 ist ein nach vorne gegen einen Betrachter B hin offener realer Lichtkasten 100 angeordnet. An seiner hinteren Seite ist der reale Lichtkasten 100 durch einen Bildschirm 140 abgeschlossen. Auf dem Bildschirm ist ein virtueller Lichtkasten 200 dargestellt. Im realen Lichtkasten 100 ist ein reales Objekt O_{R} platziert, auf dem Bildschirm bzw. im virtuellen Lichtkasten 200 ist ein virtuelles Objekt O_{V} dargestellt. Der Betrachter B kann beide Objekte O_{R} und O_{V} gleichzeitig sehen und sie visuell vergleichen.

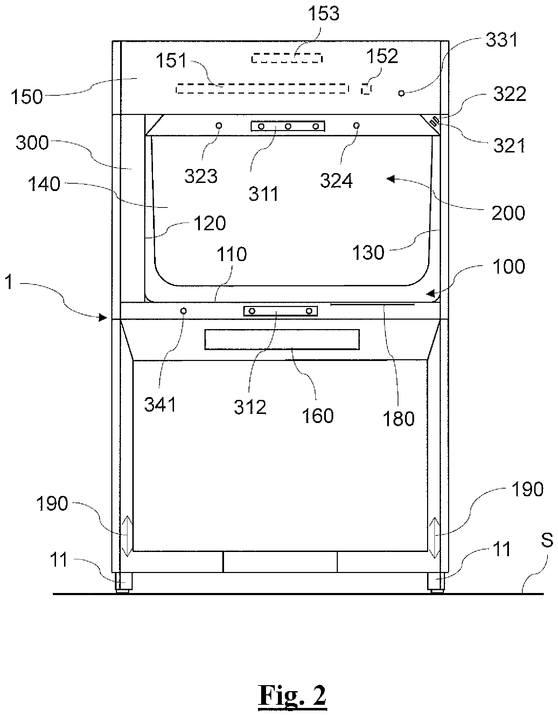

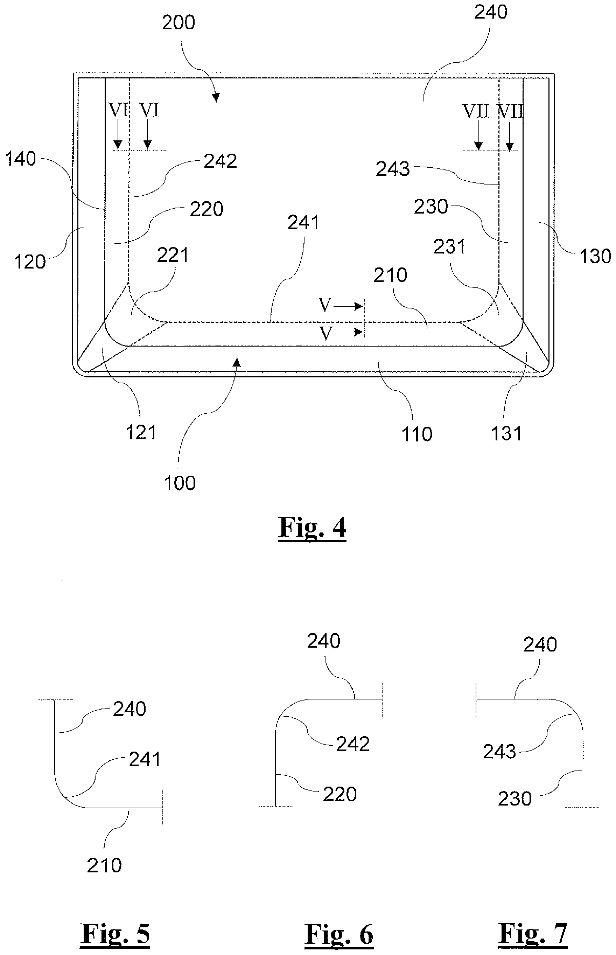

In den Figuren 2 und 4 ist die Visualisierungsvorrichtung detaillierter dargestellt, Der nach vorne offene reale Lichtkasten 100 besitzt eine untere Begrenzungswand 110, zwei seitliche Begrenzungswände 120 und 130 und eine durch den Bildschirm 140 gebildete hintere Begrenzungswand (Fig. 4). An der Oberseite des Lichtkastens 100 befindet sich eine Beleuchtungsanordnung 150 mit einer Anzahl von bezüglich Leuchtstärke und Farbtemperatur bzw. Spektralbereich unterschiedlicher, diffuses Licht und/oder Punktlicht erzeugender Lichtquellen 151 bzw. 152 sowie mit einem Kontroller 153 für die Beleuchtungsanordnung bzw. deren Lichtquellen. Die Beleuchtungsanordnung 150 kann alternativ auch durch einen rechnergesteuerten Bildschirm gebildet sein.

Der reale Lichtkasten 100 ist im Grundsatz wie bekannte Lichtkästen dieser Art ausgebildet und bedarf deshalb keiner näheren Erläuterung. Seine Beleuchtungsanordnung 150 beleuchtet ein im Lichtkasten platziertes reales Objekt unter wählbaren, insbesondere standardisierten Beleuchtungsverhältnissen, z.B. diffuses Licht und/oder Punktlicht gewünschter, insbesondere standardisierter Qualität.

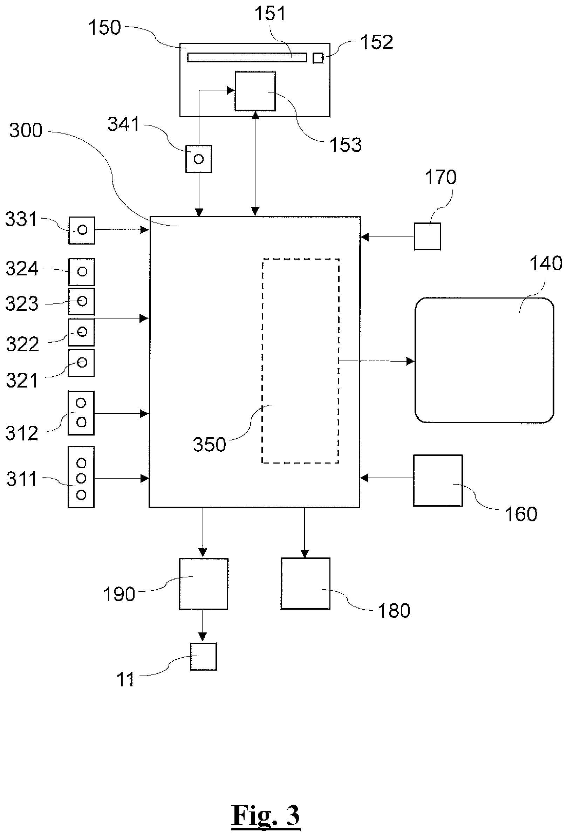

Seitlich neben dem realen Lichtkasten 100 befindet sich ein Rechner 300, der alle Komponenten bzw. Funktionen der Visualisierungsvorrichtung steuert. Unterhalb des realen Lichtkastens 100 ist eine ausziehbare Schublade angeordnet, in welcher sich ein Bedienungsinterface 160 für den Rechner 300 befindet. Das Bedienungsinterface kann z.B. als Tablet-Computer mit berührungssensitivem Bildschirm ausgebildet sein. Ferner ist der Rechner 300 mit einem Dateninterface 170 (Fig. 3) ausgestattet, über welches ihm Daten, insbesondere Appearance-Daten von aussen zugeführt werden können. Der Rechner 300 enthält als wesentlichstes Element eine Rendering-Engine 350 (Fig. 3) zur Darstellung des virtuellen Lichtkastens 200 sowie zur Anwendung von Appearance-Daten auf ein virtuelles Objekt und die Darstellung des virtuellen Objekts auf dem Bildschirm 140.

In der unteren Begrenzungswand 110 des realen Lichtkastens 100 ist ein motorisch angetriebener und vom Rechner 300 steuerbarer Dreh- und/oder Kippteller 180 für ein darauf platziertes reales Objekt angeordnet.

Gemäss Fig. 2 umfasst die Visualisierungsvorrichtung ferner noch diverse mit dem Rechner 300 zusammenarbeitende Sensoranordnungen, die im Folgenden erläutert sind.

Eine erste Sensoranordnung umfasst zwei Sensorgruppen 311 und 312 und bildet zusammen mit dem Rechner 300 ein Körper- und Kopf- bzw. Gesichtserkennungssystem. Die erste Sensoranordnung 311-312 und der Rechner 300 sind dazu ausgebildet, die Position der Augen eines Betrachters zu bestimmen. Unter Position der Augen ist einerseits die Höhe der Augen des Betrachters über der Standfläche S und anderseits die Lage der Augen des Betrachters relativ zum realen Lichtkasten 100 zu verstehen. Die beiden Sensoranordnungen sind in an sich bekannter Weise beispielsweise mit Kamera(s) und Infrarot-Sensoren ausgestattet.

Der Montagerahmen 1 ist mit hydraulisch oder elektromotorisch aus- und einfahrbaren Beinen 11 versehen, mit denen je nach erfasster bzw. errechneter Augenhöhe des Betrachters über der Standfläche S mittels nur symbolisch dargestellter, vom Rechner 300 gesteuerter Antriebsmittel 190 die Höhe des realen Lichtkastens 100 (und damit natürlich auch des virtuellen Lichtkastens 200) über der Standfläche S automatisch auf einen optimalen Wert eingestellt werden kann. Unter optimalem Wert bzw. optimaler Höhe ist dabei eine Höhe zu verstehen, bei der der Betrachter freie Sicht in den Lichtkasten hat, aber nicht direkt in die Lichtquellen der Beleuchtungsanordnung 150 blicken kann.

Die Position der Augen des Betrachters relativ zum realen Lichtkasten 100 ergibt die räumliche Richtung (Perspektive), aus welcher der Beobachter in den realen Lichtkasten 100 blickt. Der Rechner 300 ist dazu ausgebildet, aufgrund der erfassten Position der Augen des Betrachters relativ zum realen Lichtkasten 100 die perspektivische Darstellung des virtuellen Lichtkastens 200 und des in diesem dargestellten virtuellen Objekts O_{V} anzupassen, so dass der Beobachter den virtuellen Lichtkasten 200 und das darin dargestellte virtuelle Objekt O_{V} unter derselben Perspektive sieht wie das reale Objekt O_{R}.

Eine zweite Sensoranordnung ist durch eine Anzahl, hier vier Kameras 321, 322, 323 und 324 gebildet. Sie dient zur Erfassung der räumlichen Orientierung eines im realen Lichtkasten 100 platzierten realen Objekts O_{R}. Der Rechner 300 ist dazu ausgebildet, die räumliche Orientierung eines auf dem Bildschirm 140 dargestellten virtuellen Objekts O_{V} an die erfasste räumliche Orientierung des realen Objekts O_{R} anzupassen.

Eine dritte Sensoranordnung 331 umfasst einen Sensor zur Erfassung von Umgebungslicht. Der Sensor kann als Farbmessgerät mit Umgebungslichtmessfunktion ausgebildet sein. Mit Hilfe des Sensors 331 und des Rechners 300 kann das Rendern des virtuellen Objekts O_{V} im virtuellen Lichtkasten 200 aufgrund des erfassten Umgebungslichts angepasst werden.

Eine vierte Sensoranordnung 341 überwacht das von der Beleuchtungsanordnung 150 erzeugte Licht und kompensiert in Zusammenwirkung mit dem Kontroller 153 z.B. alterungsbedingte Veränderungen der Beleuchtungsanordnung 150, um die Langzeitstabilität der Beleuchtung zu gewährleisten. Die vierte Sensoranordnung 341 kann ähnlich oder gleich wie der Sensor 331 ausgebildet sein. Ferner ist der Rechner 300 dazu ausgebildet, das von der vierten Sensoranordnung 341 erfasste Beleuchtungslicht bzw. Veränderungen desselben beim Rendern des virtuellen Objekts O_{V} mit zu berücksichtigen.

Die Fig. 3 zeigt blockschematisch das Zusammenspiel der eben beschriebenen Komponenten der Visualisierungsvorrichtung mit dem Rechner 300.

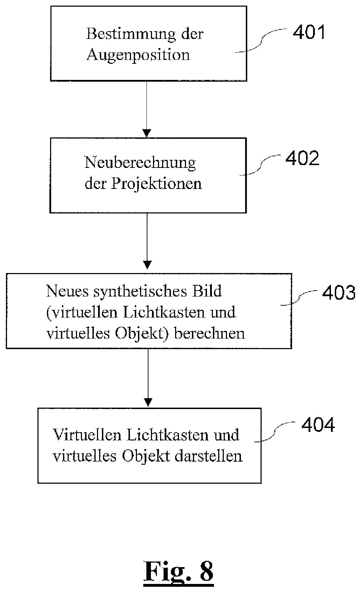

Das wichtigste Merkmal der erfindungsgemässen Visualisierungsvorrichtung ist der virtuelle Lichtkasten 200, der vom Rechner 300 auf dem Bildschirm 140 räumlich so darstellbar ist, dass er dem Betrachter B als Verlängerung des realen Lichtkastens 100 nach hinten erscheint, der Betrachter also den Eindruck hat, vor einem einzigen (tieferen) Lichtkasten zu stehen. Der virtuelle Lichtkasten 200 ist gewissermassen eine virtuelle Nachbildung des realen Lichtkastens 100 und im Rechner 300 digital gespeichert. Die räumliche Darstellung des virtuellen Lichtkastens 200 auf dem Bildschirm 140 kann vom Rechner 300 in Abhängigkeit der (Augen-)Position des Betrachters B verändert bzw. angepasst werden. Der Rechner 300 arbeitet dazu mit dem durch die erste Sensoranordnung 311-312 gebildeten Augenverfolgungssystem (Eye Tracking) zusammen und bestimmt die Position der Augen des Betrachters relativ zum realen Lichtkasten 100. Diese Position legt die Betrachtungsperspektive fest und wird dazu benutzt, die perspektivische Darstellung des virtuellen Lichtkastens 200 entsprechend der Augenposition des Betrachters anzupassen. Wie das Blockschema der Fig. 8 zeigt, wird dazu aus der Position der Augen des Betrachters (Box 401) die erforderliche Projektion neu berechnet (Box 402), dann ein neues synthetisches Bild des virtuellen Lichtkastens berechnet (Box 403) und schliesslich dieses synthetische Bild auf dem Bildschirm dargestellt (Box 404). Vorwegnehmend sei festgestellt, dass die Anpassung der Perspektivdarstellung für das virtuelle Objekt O_{V} auf dieselbe Weise erfolgt.
Wie insbesondere aus Fig. 4 erkennbar ist, sind die beiden seitlichen unteren horizontalen Kanten des realen Lichtkastens 100 nicht scharfkantig sondern abgerundet ausgebildet. Dazu ist zwischen der unteren Begrenzungswand 110 des realen Lichtkastens 100 und je einer der beiden seitlichen Begrenzungswände 120 und 130 je ein realer abgerundeter Übergangsbereich 121 bzw. 131 ausgebildet, der sich von vorne nach hinten erweitert. Vorne beträgt der Krümmungsradius der beiden realen Übergangsbereiche beispielsweise etwa 55 mm, hinten unmittelbar am Bildschirm 140 beispielsweise etwa 105 mm. Die beiden Übergangsbereiche 121 und 131 sind hier als konisch geformt dargestellt. Grundsätzlich können die Übergangsbereiche auch durch eine Nebeneinanderreihung von ebenen und zu einander geneigten Flächen bzw. Facetten gebildet sein. Im Querschnitt wären dann die Krümmungen der Übergangsbereiche nicht stetig, sondern eine Zusammensetzung von geraden Abschnitten. Eine solche Ausbildung der Übergangsbereiche ist im Folgenden als facettiert abgerundet bezeichnet.
Der virtuelle Lichtkasten 200 weist eine untere virtuelle Begrenzungswand 210, zwei virtuelle seitliche Begrenzungswände 220 und 230 und eine virtuelle hintere Begrenzungswand 240 auf. Analog zum realen Lichtkasten 100 befindet sich zwischen der unteren virtuellen Begrenzungswand 210 und den beiden seitlichen virtuellen Begrenzungswänden 220 und 230 je ein (stetig oder facettiert) abgerundeter virtueller Übergangsbereich 221 bzw. 231, welche virtuellen Übergangsbereiche sich vorzugsweise ebenfalls nach hinten erweitern und nahtlos an die realen Übergangsbereiche 121 bzw. 131des realen Lichtkastens 100 anschliessen. Die perspektivische Darstellung des virtuellen Lichtkastens 200 wird, wie schon erwähnt, vom Rechner 300 immer an die durch die (Augen-)Position des Betrachters festgelegte Perspektive angepasst. Dadurch entsteht für den Betrachter der Eindruck, nur einen einzigen Lichtkasten zu sehen.
Durch die (stetig oder facettiert) abgerundeten realen und virtuellen Übergangsbereiche 121 und 131 bzw. 221 und 231 wird erreicht, dass dem Betrachter eventuelle (kleinere) Parallaxe-Abweichungen in der Projektion des virtuellen Lichtkastens 200 nicht auffallen, wodurch die Illusion eines zusammenhängenden Lichtkastens weiter erhöht wird.

In einer Weiterbildung können auch virtuelle Übergangsbereiche 241, 242 und 243 zwischen der hinteren virtuellen Begrenzungswand 240 und der unteren virtuellen Begrenzungswand 210 sowie den seitlichen virtuellen Begrenzungswänden 220 und 230 des virtuellen Lichtkastens 200 abgerundet ausgebildet sein, so wie dies in den Figuren 5-7 schematisch dargestellt ist. Vorzugsweise können dabei die drei Übergangsbereiche 241, 242 und 243 als Klothoiden gestaltet sein.

Grundsätzlich können alle oder einzelne reale und/oder virtuelle Übergangsbereiche auch durch eine Nebeneinanderreihung von ebenen und zu einander geneigten Flächen bzw. Facetten gebildet sein. Im Querschnitt wären dann die Krümmungen der Übergangsbereiche nicht stetig, sondern eine Zusammensetzung von geraden Abschnitten.

Der Rechner 300 ist dazu ausgebildet, auf dem Bildschirm 140 mindestens ein beliebiges virtuelles Objekt O_{V} darzustellen. Die entsprechenden, die körperliche Gestalt des virtuellen Objekts beschreibenden Daten sind dazu im Rechner gespeichert bzw. können ihm von aussen zugeführt werden. Das virtuelle Objekt O_{V} kann dabei beliebig orientiert dargestellt werden. Der Rechner 300 ist ferner dazu ausgebildet, ihm zugeführte oder in ihm gespeicherte Appearance-Daten eines realen Objekts oder Materials auf das virtuelle Objekt O_{V} zu rendern. Das Rendering erfolgt dabei durch den Rechner 300 unter denselben Beleuchtungsbedingungen, wie sie im realen Lichtkasten 100 vorliegen. Ebenfalls erfolgt die Projektion (Perspektive) der Darstellung des virtuellen Objekts O_{V} so, dass sie mit der Perspektive des Betrachters eines realen Objekts O_{R} im realen Lichtkasten 100 übereinstimmt. Wenn die Beleuchtungsbedingungen im realen Lichtkasten 100 geändert werden, werden sie automatisch auch im virtuellen Lichtkasten 200 geändert und das Rendering erfolgt unter Berücksichtigung der geänderten Beleuchtungsbedingungen. Ferner kann dabei auch das mit Hilfe des Sensors 331 erfasste Umgebungslicht mit berücksichtigt werden.

Mittels der Kameras 321-324 bzw. der durch diese gebildeten zweiten Sensoranordnung kann (im Zusammenwirken mit dem Rechner 300) die räumliche Lage bzw. Orientierung eines im realen Lichtkasten 100 platzierten realen Objekts O_{R} erfasst werden. Der Rechner 300 ist ferner dazu ausgebildet, die räumliche Orientierung eines auf dem Bildschirm 140 dargestellten virtuellen Objekts O_{V} an die erfasste räumlichen Orientierung des realen Objekts O_{R} in Echtzeit anzupassen, das heisst das virtuelle Objekt O_{V} im virtuellen Lichtkasten 200 mit derselben Orientierung darzustellen, wie die Orientierung des realen Objekts O_{R} im realen Lichtkasten 100.

Für eine optimale Darstellungsqualität von Bildschirmen werden üblicherweise Monitor-Profile eingesetzt. Die von Bildschirmen dargestellten Farben und/oder die Helligkeit sind mehr oder weniger blickwinkelabhängig. Gemäss einer vorteilhaften Weiterbildung der vorliegenden Erfindung ist im Rechner 300 eine Anzahl verschiedener Monitor-Profile für den eingesetzten Bildschirm 140 gespeichert, wobei diese Monitor-Profile bei der Kalibrierung des Bildschirms für verschiedene vertikale und horizontale Blickwinkel erstellt wurden. Der Rechner 300 ist dazu ausgebildet, je nach (Augen-)Position des Betrachters ein passendes Monitor-Profil auszuwählen und beim Rendering des virtuellen Lichtkastens und vor allem des virtuellen Objekts mit zu berücksichtigen. Falls für den durch die Augenposition des Beobachters gegebenen Blickwinkel kein Monitor-Profil vorhanden ist, kann der Rechner 300 dabei auch ein passendes Monitor-Profil berechnen, z.B. durch Interpolation der gespeicherten Monitor-Profile für dem tatsächlichen Blickwinkel benachbarte Blickwinkel.

In Fig. 9 ist skizzenhaft ein weiteres Ausführungsbeispiel der erfindungsgemässen Visualisierungsvorrichtung dargestellt.

Bei diesem Ausführungsbeispiel sind die obere, die untere und die seitlichen Begrenzungswände des realen Lichtkastens 100a als vom Rechner 300 gesteuerte Bildschirme 150a, 110a, 120a und 130a ausgebildet. Zur Vermeidung oder zumindest Abschwächung des Eindrucks scharfkantiger Übergänge zwischen je zwei aneinander grenzenden Bildschirmen ist an diesen Übergängen ein Lichtleitermaterial L angeordnet. In einer Variante sind nur die obere und die beiden seitlichen Begrenzungswände des realen Lichtkastens durch Bildschirme gebildet.

Die Bildschirme können gekrümmt ausgebildet sein und/oder an ihren Rändern abgerundete Übergangsbereiche zur Vermeidung scharfkantiger Übergänge aufweisen.

Der obere Bildschirm 150a und die beiden seitlichen Bildschirme 120a und 130a sowie gegebenenfalls auch der untere Bildschirm 110a dienen zum einen zur Beleuchtung des realen Objekts und zum anderen aber auch dazu, das virtuelle Objekt in einer kompletten (vorgängig aufgenommenen) hemisphärischen Umgebung (Szene) darzustellen. Die Hemisphere wird dabei entsprechend auf die rechtwinkelige Anordnung der Bildschirme zueinander projiziert. Das Rendering verwendet dabei die gewählte Umgebung zur Beleuchtung des virtuellen Objektes.

Die Echtzeit-Synchronisierung und Anpassung des Appearance Rendering (Beleuchtungslicht, Umgebungslicht, Betrachter-Position, Orientierung und Position des realen Objekts) gewährleisten einen höchst immersiven Eindruck für den Betrachter und ermöglichen eine genaue und aussagekräftige Beurteilung der Qualität der Appearance-Daten und des darauf basierenden Renderings sowie den Vergleich eines realen Materials oder Objekts im realen Lichtkasten mit dem virtuellen Objekt im virtuellen Lichtkasten.

## Patentansprüche

1. Visualisierungsvorrichtung mit einem realen Lichtkasten (100), der eine Beleuchtungsanordnung (150) sowie eine bezogen auf einen Betrachter (B) hintere Begrenzungswand aufweist, wobei die hintere Begrenzungswand des realen Lichtkastens (100) als Bildschirm (140) ausgebildet ist und die Vorrichtung einen Rechner (300) aufweist, der dazu ausgebildet ist, auf dem Bildschirm (140) einen virtuellen Lichtkasten (200) so räumlich darzustellen, dass der auf dem Bildschirm (140) dargestellte virtuelle Lichtkasten (200) eine kontinuierliche Verlängerung des realen Lichtkastens (100) nach hinten zu bilden scheint, so dass für den Betrachter (B) der Eindruck entsteht, es handle sich um einen einzigen zusammenhängenden Lichtkasten, und dass der Rechner (300) ferner dazu ausgebildet ist, mindestens ein virtuelles Objekt (O_{V}) so auf dem Bildschirm (140) darzustellen, dass das virtuelle Objekt (O_{V}) sich im virtuellen Lichtkasten (200) befindet, **dadurch gekennzeichnet, dass** der reale Lichtkasten (100) eine reale untere Begrenzungswand (110) und reale seitliche Begrenzungswände (120, 130) aufweist, dass zwischen der realen unteren Begrenzungswand (110) und je einer der beiden realen seitlichen Begrenzungswände (120, 130) reale stetig oder facettiert abgerundete Übergangsbereiche (121, 131) ausgebildet sind, dass der virtuelle Lichtkasten (200) eine virtuelle untere Begrenzungswand (210) und virtuelle seitliche Begrenzungswände (220, 230) aufweist, dass sich zwischen der virtuellen unteren Begrenzungswand (210) und je einer der beiden virtuellen seitlichen Begrenzungswände (220, 230) virtuelle stetig oder facettiert abgerundete Übergangsbereiche (221, 231) befinden, und dass die realen Übergangsbereiche (121, 131) und die virtuellen Übergangsbereiche (221, 231) für einen Betrachter nahtlos in einander übergehen, wobei sich die realen Übergangsbereiche (121, 131) und die virtuellen Übergangsbereiche (221, 231) nach hinten erweitern.

2. Vorrichtung nach Anspruch 1, **dadurch gekennzeichnet, dass** der virtuelle Lichtkasten (200) eine virtuelle hintere Begrenzungswand (240) und einen virtuellen Übergangsbereich (241) zwischen der virtuellen unteren Begrenzungswand (210) und der virtuellen hinteren Begrenzungswand (240) aufweist, und dass dieser virtuelle Übergangsbereich (241) stetig oder facettiert abgerundet ausgebildet ist.

3. Vorrichtung nach Anspruch 2, **dadurch gekennzeichnet, dass** der virtuelle Lichtkasten (200) virtuelle Übergangsbereiche (242, 243) zwischen der virtuellen hinteren Begrenzungswand (240) und den virtuellen seitlichen Begrenzungswänden (220, 230) aufweist und dass diese virtuellen Übergangsbereiche (242, 243) stetig oder facettiert abgerundet ausgebildet sind.

4. Vorrichtung nach einem der Ansprüche 2 oder 3, **dadurch gekennzeichnet, dass** die virtuellen Übergangsbereiche (241, 242, 243) als Klothoiden ausgeprägt sind.

5. Vorrichtung nach einem der Ansprüche 1 bis 4, **dadurch gekennzeichnet, dass** sie eine erste Sensoranordnung (311, 312) zur Erfassung der Position der Augen eines Betrachters (B) aufweist.

6. Vorrichtung nach Anspruch 5, **dadurch gekennzeichnet, dass** die erste Sensoranordnung (311, 312) und der Rechner (300) dazu ausgebildet sind, die Höhe der Augen des Beobachters über einer Standfläche (S) zu bestimmen, und dass sie vom Rechner (300) gesteuerte Mittel (11, 190) zur Verstellung der Höhe des realen Lichtkastens (100) über der Standfläche (S) aufweist, und dass der Rechner (300) dazu ausgebildet ist, die Höhe des realen Lichtkastens (100) über der Standfläche (S) aufgrund der bestimmten Augenhöhe des Betrachters über der Standfläche (S) einzustellen.

7. Vorrichtung nach einem der Ansprüche 5 oder 6, **dadurch gekennzeichnet, dass** die erste Sensoranordnung (311, 312) und der Rechner (300) dazu ausgebildet sind, die Position der Augen eines Betrachters (B) relativ zum realen Lichtkasten (100) zu bestimmen, und dass der Rechner (300) dazu ausgebildet ist, aufgrund der bestimmten Position der Augen des Betrachters die perspektivische Darstellung des virtuellen Lichtkastens (200) so anzupassen, dass der virtuelle Lichtkasten (200) in jeder Position des Betrachters für diesen eine kontinuierliche Verlängerung des realen Lichtkastens (100) darstellt.

8. Vorrichtung nach Anspruch 7, **dadurch gekennzeichnet, dass** der Rechner (300) dazu ausgebildet ist, aufgrund der bestimmten Position der Augen des Betrachters die perspektivische Darstellung des virtuellen Objekts (O_{V}) anzupassen.

9. Vorrichtung nach Anspruch 6, **dadurch gekennzeichnet, dass** im Rechner (300) mehrere auf unterschiedlichen Blickwinkeln basierende Monitor-Profile gespeichert sind und dass der Rechner (300) dazu ausgebildet ist, beim Rendern des virtuellen Lichtkastens (200) und des virtuellen Objekts (O_{V}) in Abhängigkeit der bestimmten Position der Augen des Betrachters relativ zum realen Lichtkasten aus den gespeicherten Monitor-Profilen ein Monitor-Profil auszuwählen oder zu berechnen und anzuwenden.

10. Vorrichtung nach einem der Ansprüche 1 bis 9, **dadurch gekennzeichnet, dass** der Rechner (300) dazu ausgebildet ist, ihm zugeführte Appearance-Daten eines realen Materials auf ein virtuelles Objekt (O_{V}) zu rendern.

11. Vorrichtung nach einem der Ansprüche 1 bis 10, **dadurch gekennzeichnet, dass** sie eine zweite Sensoranordnung (321, 322, 323, 324) zur Erfassung der räumlichen Orientierung eines oder mehrerer im realen Lichtkasten (100) platzierten/r realen/r Objekts/e (O_{R}) aufweist, und dass der Rechner (300) dazu ausgebildet ist, die räumliche Orientierung des/der korrespondierenden virtuellen Objekts/e (O_{V}) an die erfasste räumlichen Orientierung des/der realen Objekts/e (O_{R}) anzupassen.

12. Vorrichtung nach einem der Ansprüche 1 bis 11, **dadurch gekennzeichnet, dass** die Beleuchtungsbedingungen im realen Lichtkasten (100) einstellbar veränderbar sind, und dass der Rechner (300) dazu ausgebildet ist, die Beleuchtungsbedingungen des realen Lichtkastens (100) im virtuellen Lichtkasten (200) nachzubilden sowie das Rendern des virtuellen Objekts (O_{V}) entsprechend anzupassen.

13. Vorrichtung nach einem der Ansprüche 1 bis 12, **dadurch gekennzeichnet, dass** der Bildschirm (140) ein Bildschirm mit hoher Leuchtdichte im Bereich von 2500 - 5000 cd/m² ist.

14. Vorrichtung nach einem der Ansprüche 1 bis 13, **dadurch gekennzeichnet, dass** der Bildschirm (140) ein autostereoskopischer Bildschirm ist.

15. Vorrichtung nach einem der Ansprüche 1 bis 14, **dadurch gekennzeichnet, dass** sie eine dritte Sensoranordnung (331) zur Erfassung von Umgebungslicht aufweist, und dass der Rechner (300) dazu ausgebildet ist, das Rendern des virtuellen Objekts (O_{V}) aufgrund des erfassten Umgebungslichts anzupassen.

16. Vorrichtung nach einem der Ansprüche 1 bis 15, **dadurch gekennzeichnet, dass** sie eine vierte Sensoranordnung (341) zur Erfassung des Beleuchtungslichts des realen Lichtkastens (100) aufweist und dass der Rechner (300) dazu ausgebildet ist, das Rendern des virtuellen Objekts (O_{V}) aufgrund des erfassten Beleuchtungslichts anzupassen.

17. Vorrichtung nach Anspruch 16, **dadurch gekennzeichnet, dass** sie mit der vierten Sensoranordnung (341) zusammenarbeitende Kompensationsmittel (153) aufweist, um insbesondere alterungsbedingte Veränderungen der Beleuchtungsanordnung (150) zu kompensieren.

18. Vorrichtung nach einem der Ansprüche 1 bis 17, **dadurch gekennzeichnet, dass** der reale Lichtkasten (100; 100a) anstelle der Beleuchtungsanordnung eine obere Begrenzungswand aufweist, die als vom Rechner (300) gesteuerter Bildschirm (150a) ausgebildet ist.

19. Vorrichtung nach einem der Ansprüche 1 bis 18, **dadurch gekennzeichnet, dass** die seitlichen Begrenzungswände des realen Lichtkastens (100a) als vom Rechner (300) gesteuerte Bildschirme (120a, 130a) ausgebildet sind.

20. Vorrichtung nach einem der Ansprüche 1 bis 19, **dadurch gekennzeichnet, dass** die untere Begrenzungswand des realen Lichtkastens (100a) als vom Rechner (300) gesteuerter Bildschirm (110a) ausgebildet ist.

21. Vorrichtung nach einem der Ansprüche 19 oder 20, **dadurch gekennzeichnet, dass** zwischen je zwei aneinander grenzenden Bildschirmen (110a, 120a, 130a, 150a) zur Vermeidung von scharfen Kanten ein Lichtleitermaterial (L) angeordnet ist.

22. Vorrichtung nach einem der Ansprüche 18 bis 21, **dadurch gekennzeichnet, dass** die Bildschirme (110a, 120a, 130a) an ihren Seiten abgerundete Übergangsbereiche aufweisen.

## Claims

1. A visualization device comprising an actual light box (100), which comprises an illumination array (150) and a limiting wall, which is a rear wall in relation to an observer (B), wherein the rear limiting wall of the actual light box (100) is embodied as a screen (140) and wherein the visualization device further comprises a computer (300), which is embodied to spatially display a virtual light box (200) on the screen (140) such that the virtual light box (200) displayed on the screen (140) appears to form a continuous rearward extension of the actual light box (100), creating the impression for the observer (B) that a single contiguous light box is formed, and that the computer (300) is further embodied to display at least one virtual object (Oᵥ) on the screen (140) such that the virtual object (Oᵥ) is situated in the virtual light box (200), **characterized in that** the actual light box (100) comprises an actual bottom limiting wall (110) and actual side limiting walls (120, 130), **in that** actual transition regions (121, 131) that are rounded in a constant or facetted way are formed between the actual bottom limiting wall (110) and each of the two actual side limiting walls (120, 130), **in that** the virtual light box (200) comprises a virtual bottom limiting wall (210) and virtual side limiting walls (220, 230), **in that** virtual transition regions (221, 231) that are rounded in a constant or facetted way are situated between the virtual bottom limiting wall (210) and each of the two virtual side limiting walls (220, 230), and **in that** the actual transition regions (121, 131) and the virtual transition regions (221, 231) transition seamlessly into one another to an observer, wherein the actual transition regions (121, 131) and the virtual transition regions (221, 231) extend toward the rear.

2. The device according to claim 1, **characterized in that** the virtual light box (200) further comprises a virtual rear limiting wall (240) and a virtual transition region (241) between the virtual bottom limiting wall (210) and the virtual rear limiting wall (240), and **in that** this virtual transition region (241) is embodied to be rounded in a constant or facetted way.

3. The device according to claim 2, **characterized in that** the virtual light box (200) comprises virtual transition regions (242, 243) between the virtual rear limiting wall (240) and the virtual side limiting walls (220, 230), and **in that** these virtual transition regions (242, 243) are embodied to be rounded in a constant or facetted way.

4. The device according to either of claims 2 and 3, **characterized in that** the virtual transition regions (241, 242, 243) are shaped as clothoids.

5. The device according to any of claims 1 to 4, **characterized in that** it comprises a first sensor array (311, 312) for detecting the position of the eyes of an observer (B).

6. The device according to claim 5, **characterized in that** the first sensor array (311, 312) and the computer (300) are embodied to determine the height of an observer's eyes above a support base area (S), and **in that** the device comprises means (11, 190), controlled by the computer (300), for adjusting the height of the actual light box (100) above the support base area (S), and **in that** the computer (300) is embodied to set the height of the actual light box (100) above the support base area (S) on the basis of the determined height of the observer's eyes above the support base area (S).

7. The device according to either of claims 5 and 6, **characterized in that** the first sensor array (311, 312) and the computer (300) are embodied to determine the position of the eyes of an observer (B) relative to the actual light box (100), and **in that** the computer (300) is embodied to adapt the perspective display of the virtual light box (200) on the basis of the determined position of the observer's eyes, such that the virtual light box (200) displays a continuous extension of the actual light box (100) to the observer in any position of the observer.

8. The device according to claim 7, **characterized in that** the computer (300) is embodied to adapt the perspective display of the virtual object (Oᵥ) on the basis of the determined position of the observer's eyes.

9. The device according to claim 6, **characterized in that** multiple monitor profiles based on different angles of view are stored in the computer (300), and **in that** the computer (300) is embodied to select or calculate and apply a monitor profile from the stored monitor profiles when rendering the virtual light box (200) and the virtual object (O_{V}), on the basis of the determined position of the observer's eyes relative to the actual light box.

10. The device according to any of claims 1 to 9, **characterized in that** the computer (300) is embodied to render appearance data of an actual material that are fed to the computer onto a virtual object (O_{V}).

11. The device according to any of claims 1 to 10, **characterized in that** it comprises a second sensor array (321, 322, 323, 324) for detecting the spatial orientation of one or more actual object(s) (O_{R}) placed in the actual light box (100), and **in that** the computer (300) is embodied to adapt the spatial orientation of the corresponding virtual object(s) (O_{V}) to the detected spatial orientation of the actual object(s) (O_{R}).

12. The device according to any of claims 1 to 11, **characterized in that** the illumination conditions in the actual light box (100) are adjustably variable, and **in that** the computer (300) is embodied to duplicate the illumination conditions of the actual light box (100) in the virtual light box (200) and to correspondingly adapt the rendering of the virtual object (O_{V}).

13. The device according to any of claims 1 to 12, **characterized in that** the screen (140) is a screen with high luminous intensity in the range of 2500 to 5000 cd/m².

14. The device according to any of claims 1 to 13, **characterized in that** the screen (140) is an autostereoscopic screen.

15. The device according to any of claims 1 to 14, **characterized in that** it comprises a third sensor array (331) for detecting ambient light, and **in that** the computer (300) is embodied to adapt the rendering of the virtual object (O_{V}) on the basis of the detected ambient light.

16. The device according to any of claims 1 to 15, **characterized in that** it comprises a fourth sensor array (341) for detecting the illumination light of the actual light box (100), and **in that** the computer (300) is embodied to adapt the rendering of the virtual object (O_{V}) on the basis of the detected illumination light.

17. The device according to claim 16, **characterized in that** it comprises compensation means (153) that cooperate with the fourth sensor array (341), in particular to compensate for age-related changes in the illumination array (150).

18. The device according to any of claims 1 to 17, **characterized in that** the actual light box (100; 100a) comprises a top limiting wall, which is embodied as a screen (150a) that is controlled by the computer (300), in place of the illumination array.

19. The device according to any of claims 1 to 18, **characterized in that** the side limiting walls of the actual light box (100a) are embodied as screens (120a, 130a) that are controlled by the computer (300).

20. The device according to any of claims 1 to 19, **characterized in that** the bottom limiting wall of the actual light box (100a) is embodied as a screen (110a) that is controlled by the computer (300).

21. The device according to either of claims 19 and 20, **characterized in that**, to avoid square edges, a light conductor material (L) is disposed between every two adjoining screens (110a, 120a, 130a, 150a).

22. The device according to any of claims 18 to 21, **characterized in that** the sides of the screens (110a, 120a, 130a) have rounded transition regions.

## Revendications

1. Dispositif de visualisation avec une boîte de lumière réelle (100), qui présente un ensemble d'éclairage (150) ainsi qu'une paroi de délimitation arrière par rapport à un observateur (B), dans lequel la paroi de délimitation arrière de la boîte de lumière réelle (100) est réalisée en tant qu'écran (140) et le dispositif présente un ordinateur (300), qui est réalisé pour représenter spatialement une boîte de lumière virtuelle (200) sur l'écran (140) de telle sorte que la boîte de lumière virtuelle (200) représentée sur l'écran (140) semble former un prolongement continu de la boîte de lumière réelle (100) vers l'arrière, si bien que l'observateur (B) a l'impression qu'il s'agit d'une seule boîte de lumière cohérente, et que l'ordinateur (300) est réalisé en outre pour représenter au moins un objet virtuel (O_{V}) sur l'écran (140) de telle sorte que l'objet virtuel (O_{V}) se trouve dans la boîte de lumière virtuelle (200),
**caractérisé en ce que** la boîte de lumière réelle (100) présente une paroi de délimitation inférieure réelle (110) et des parois de délimitation latérales réelles (120, 130), que des zones de transition arrondies facettées ou continues réelles (121, 131) sont réalisées entre la paroi de délimitation inférieure réelle (110) et respectivement une des deux parois de délimitation latérales réelles (120, 130), que la boîte de lumière virtuelle (200) présente une paroi de délimitation inférieure virtuelle (210) et des parois de délimitation latérales virtuelles (220, 230), que des zones de transition arrondies facettées ou continues virtuelles (221, 231) se trouvent entre la paroi de délimitation inférieure virtuelle (210) et respectivement une des deux parois de délimitation latérales virtuelles (220, 230), et que les zones de transition réelles (121, 131) et les zones de transition virtuelles (221, 231) passent sans transition de l'une à l'autre pour un observateur, dans lequel les zones de transition réelles (121, 131) et les zones de transition virtuelles (221, 231) s'élargissent vers l'arrière.

2. Dispositif selon la revendication 1, **caractérisé en ce que** la boîte de lumière virtuelle (200) présente une paroi de délimitation arrière virtuelle (240) et une zone de transition virtuelle (241) entre la paroi de délimitation inférieure virtuelle (210) et la paroi de délimitation arrière virtuelle (240), et que cette zone de transition virtuelle (241) est réalisée arrondie facettée ou continue.

3. Dispositif selon la revendication 2, **caractérisé en ce que** la boîte de lumière virtuelle (200) présente des zones de transition virtuelles (242, 243) entre la paroi de délimitation arrière virtuelle (240) et les parois de délimitation latérales virtuelles (220, 230) et que ces zones de transition virtuelles (242, 243) sont réalisées arrondies facettées ou continues.

4. Dispositif selon l'une quelconque des revendications 2 ou 3, **caractérisé en ce que** les zones de transition virtuelles (241, 242, 243) prennent la forme de clothoïdes.

5. Dispositif selon l'une quelconque des revendications 1 à 4, **caractérisé en ce qu'**il présente un premier ensemble de capteurs (311, 312) pour la détection de la position de l'oeil d'un observateur (B).

6. Dispositif selon la revendication 5, **caractérisé en ce que** le premier ensemble de capteurs (311, 312) et l'ordinateur (300) sont réalisés pour déterminer la hauteur des yeux de l'observateur au-dessus d'une surface d'appui (S), et qu'il présente des moyens (11, 190) commandés par l'ordinateur (300) pour le réglage de la hauteur de la boîte de lumière réelle (100) au-dessus de la surface d'appui (S), et que l'ordinateur (300) est réalisé pour régler la hauteur de la boîte de lumière réelle (100) au-dessus de la surface d'appui (S) en raison de la hauteur des yeux déterminée de l'observateur au-dessus de la surface d'appui (S).

7. Dispositif selon l'une quelconque des revendications 5 ou 6, **caractérisé en ce que** le premier ensemble de capteurs (311, 312) et l'ordinateur (300) sont réalisés pour déterminer la position des yeux d'un observateur (B) par rapport à la boîte de lumière réelle (100), et que l'ordinateur (300) est réalisé pour adapter la représentation en perspective de la boîte de lumière virtuelle (200) en raison de la position déterminée des yeux de l'observateur de telle sorte que la boîte de lumière virtuelle (200) représente dans chaque position de l'observateur pour celui-ci un prolongement continu de la boîte de lumière réelle (100).

8. Dispositif selon la revendication 7, **caractérisé en ce que** l'ordinateur (300) est réalisé pour adapter la représentation en perspective de l'objet virtuel (Ov) en raison de la position déterminée des yeux de l'observateur.

9. Dispositif selon la revendication 6, **caractérisé en ce que** plusieurs profils de moniteur basés sur différents angles de vision sont enregistrés dans l'ordinateur (300) et que l'ordinateur (300) est réalisé pour sélectionner ou calculer et appliquer un profil de moniteur parmi les profils de moniteur enregistrés lors du rendu de la boîte de lumière virtuelle (200) et de l'objet virtuel (O_{V}) en fonction de la position déterminée des yeux de l'observateur par rapport à la boîte de lumière réelle.

10. Dispositif selon l'une quelconque des revendications 1 à 9, **caractérisé en ce que** l'ordinateur (300) est réalisé pour rendre des données transmises d'apparence d'un matériau réel sur un objet virtuel (O_{V}).

11. Dispositif selon l'une quelconque des revendications 1 à 10, **caractérisé en ce qu'**il présente un deuxième ensemble de capteurs (321, 322, 323, 324) pour la détection de l'orientation spatiale d'un ou plusieurs objets(s) réel(s) (O_{R}) placé(s) dans la boîte de lumière réelle (100), et que l'ordinateur (300) est réalisé pour adapter l'orientation spatiale du/des objet(s) virtuel(s) (O_{V}) correspondants à l'orientation spatiale détectée de/des objets(s) réel(s) (O_{R}).

12. Dispositif selon l'une quelconque des revendications 1 à 11, **caractérisé en ce que** les conditions d'éclairage sont modifiables de manière réglable dans la boîte de lumière réelle (100), et que l'ordinateur (300) est réalisé pour reproduire les conditions d'éclairage de la boîte de lumière réelle (100) dans la boîte de lumière virtuelle (200) ainsi que pour adapter en conséquence le rendu de l'objet virtuel (O_{V}).

13. Dispositif selon l'une quelconque des revendications 1 à 12, **caractérisé en ce que** l'écran (140) est un écran à luminance élevée dans la plage de 2500 - 5000 cd/m².

14. Dispositif selon l'une quelconque des revendications 1 à 13, **caractérisé en ce que** l'écran (140) est un écran auto-stéréoscopique.

15. Dispositif selon l'une quelconque des revendications 1 à 14, **caractérisé en ce qu'**il présente un troisième ensemble de capteurs (331) pour la détection de lumière ambiante, et que l'ordinateur (300) est réalisé pour adapter le rendu de l'objet virtuel (O_{V}) en raison de la lumière ambiante détectée.

16. Dispositif selon l'une quelconque des revendications 1 à 15, **caractérisé en ce qu'**il présente un quatrième ensemble de capteurs (341) pour la détection de la lumière d'éclairage de la boîte de lumière réelle (100) et que l'ordinateur (300) est réalisé pour adapter le rendu de l'objet virtuel (O_{V}) en raison de la lumière d'éclairage détectée.

17. Dispositif selon la revendication 16, **caractérisé en ce qu'**il présente des moyens de compensation (153) coopérant avec le quatrième ensemble de capteurs (341) pour compenser en particulier des variations de l'ensemble d'éclairage (150) liées au vieillissement.

18. Dispositif selon l'une quelconque des revendications 1 à 17, **caractérisé en ce que** la boîte de lumière réelle (100 ; 100a) présente à la place de l'ensemble d'éclairage une paroi de délimitation supérieure, qui est réalisée en tant qu'écran (150a) commandé par l'ordinateur (300).

19. Dispositif selon l'une quelconque des revendications 1 à 18, **caractérisé en ce que** les parois de délimitation latérales de la boîte de lumière réelle (100a) sont réalisées en tant qu'écrans (120a, 130a) commandés par l'ordinateur (300).

20. Dispositif selon l'une quelconque des revendications 1 à 19, **caractérisé en ce que** la paroi de délimitation inférieure de la boîte de lumière réelle (100a) est réalisée en tant qu'écran (110a) commandé par l'ordinateur (300).

21. Dispositif selon l'une quelconque des revendications 19 ou 20, **caractérisé en ce qu'**un matériau conducteur de lumière (L) est agencé entre respectivement deux écrans (110a, 120a, 130a, 150a) adjacents l'un à l'autre pour éviter des arêtes vives.

22. Dispositif selon l'une quelconque des revendications 18 à 21, **caractérisé en ce que** les écrans (110a, 120a, 130a) présentent des zones de transition arrondies sur leurs côtés.
